# EUROPEAN PATENT APPLICATION

(11) **EP 4 664 913 A1**
(43) Date of publication of application: **17.12.2025**
(21) Application number: 24181443.3
(22) Date of filing: 11.06.2024
(51) Int. Cl.: H04N 23/71, H04N 23/73, H04N 23/76

(54) **APPARATUS, OPTICAL IMAGING SYSTEM, METHOD AND COMPUTER PROGRAM**

(71) Applicant: Leica Instruments (Singapore) Pte. Ltd., Singapore 618299 (SG)
(72) Inventor: JUNG, David, 618299 Singapore (SG)
(74) Representative: 2SPL Patentanwälte PartG mbB

(57) **Abstract**

Examples relate to an apparatus for an optical imaging system. The apparatus comprises one or more processors and one or more storage devices. The apparatus is configured to obtain sensor data of an optical imaging sensor of the optical imaging system. The sensor data is indicative of an image acquired using the optical imaging system. Further, the apparatus is configured to determine a single image based on the sensor data. The apparatus is further configured to control a generation of adjusted sensor data for suppressing a region corresponding to the intervening object to the user. The control of the generation of the adjusted sensor data is based on the single image.

## Description

### Technical field

Examples relate to an apparatus, an optical imaging system, such as a surgical optical imaging system, a method, and a computer program.

### Background

Current image processing pipelines include camera color, vignetting, and color skew correction. These steps address hardware, e.g., optical imaging sensor and optics, calibration and issues but do not enhance the image further.

Thus, there may be a desire for an improved concept for an image processing pipeline.

### Summary

This desire is addressed by the subject-matter of the independent claims.

The concept proposed in the present disclosure is based on the insight, that a region corresponding to an intervening object can be suppressed based on a single image. In this way, a brightness of an image acquired using on optical imaging system can be adjusted independently of an intervening object. Thus, a prominence of a sample under test can be improved by suppressing parts of sensor data which do not correlate with the sample.

Examples provide an apparatus for an optical imaging system, comprising one or more processors and one or more storage devices. The apparatus is configured to obtain sensor data of an optical imaging sensor of the optical imaging system. The sensor data is indicative of an image acquired using the optical imaging system. Further, the apparatus is configured to determine a single image based on the sensor data. The apparatus is further configured to control a generation of adjusted sensor data for suppressing a region corresponding to the intervening object to the user. The control of the generation of the adjusted sensor data is based on the single image. Suppressing the region corresponding to the intervening may allow to adjust a brightness of the image of the sample independently of an object or structure not part of the sample. That is, the sensor data may comprise information about an image of the sample (that is of interest to the user) and optionally an intervening object (that is of no interest to the user). In principle, the intervening object can be any structure which is not part of the sample. For example, the intervening object may be a surgical tool which is moved into the field of view of the optical imaging system by a user. Thus, the intervening object can affect the representation of the image of the sample that is of interest to the user. Suppressing the region of the intervening object may allow to reduce or eliminate the effect of the intervening object on the image of the sample. That is, the adjusted sensor data may be indicative of an adjusted image (generated by post processing and/or by a different setting of the optical imaging system), in which the image of the sample (e.g., an area showing a structure of the sample) is emphasized and/or better recognizable in comparison to the image of the sample part of the sensor data. For example, the region of the intervening object may be suppressed for highlighting the sample in the adjusted sensor data. For example, the structure of the sample may be highlighted and/or the structure of the intervening object may be suppressed in the adjusted sample data. In this way, the image processing pipeline can be improved for enhancing the perception of the sample, by considering the region corresponding to the intervening object.

In an example, the apparatus may be configured to determine the single image by determining the region corresponding to the intervening object based on a size of the region corresponding to the intervening object, a brightness of the region corresponding to the intervening object, a position of the region corresponding to the intervening object, a color of the region corresponding to the intervening object and/or a sharpness of the region corresponding to the intervening object. That is, the apparatus can determine the single image for controlling the generation of the adjusted sensor data based on a specific characteristic of the intervening object. For example, it may be likely that the intervening object is positioned at an edge of the field of view of the optical imaging system, that the brightness of the intervening object exceeds a threshold, that the color of the intervening object differs from the sample. Thus, the single image can be determined based on the region corresponding to the intervening object in a facilitated way.

In an example, the apparatus may be configured to suppress the region corresponding to the intervening object to the user by performing image manipulation for decreasing a prominence of the region corresponding to the intervening object to the user. That is, the generation of the adjusted sensor data may be generated by post processing of the sensor data of the optical imaging system. Image manipulation may allow to adjust any desired parameter of the image of the sample. In this way, for example, the perception of the sample can be customized in the adjusted sensor data.

In an example, the image manipulation may comprise reducing a brightness of the region corresponding to the intervening object to the user. In this way, the prominence of the intervening object can be decreased in a facilitated way.

In an example, the image manipulation may comprise applying a mask to the region corresponding to the intervening object to the user. The mask may allow to adjust a representation of the region corresponding to the intervening object in a facilitated way.

In an example, the apparatus may be configured to suppress the region corresponding to the intervening object to the user by generating setting data indicative of a setting of the optical imaging system for decreasing a prominence of the region corresponding to the intervening object to the user. Further, the apparatus may be configured to transmit the setting data for adjusting a setting of the optical imaging system. That is, the apparatus may control the generation of the adjusted sensor data by controlling a setting of the optical imaging system. For example, the apparatus may adjust the setting of an illumination source of the optical imaging system, a position of the field of view and/or a size of the field of view. In this way, further post processing of the sensor data can be omitted.

In an example, the setting data may be for adjusting an exposure algorithm of the optical imaging system. Adjusting the exposure algorithm may allow to decrease the prominence of the region corresponding to the intervening object. That is, by adjusting the exposure algorithm an effect of the intervening object on the image of the sample can be decreased, for example.

In an example, the apparatus may be configured to determine the single image by determining the region corresponding to the intervening object based on the brightness of the region corresponding to the intervening object and the size of the region corresponding to the intervening object, a position of the region corresponding to the intervening object, a color of the region corresponding to the intervening object and/or a sharpness of the region corresponding to the intervening object. Using the brightness and an additional parameter may improve the determination of the region corresponding to the intervening object. In this way, the user experience can be improved by an increased reliability.

Examples provide an optical imaging system comprising an apparatus as described above.

Examples provide a method for an optical imaging system comprising obtaining sensor data of an optical imaging sensor of the optical imaging system. The sensor data is indicative of an image acquired using the optical imaging system. The method further comprises determining a single image based on the sensor data. The method further comprises controlling a generation of adjusted sensor data for suppressing a region corresponding to an intervening object to the user based on the single image.

Various examples of the present disclosure relate to a corresponding computer program with a program code for performing the above method when the computer program is executed on a processor.

### Short description of the Figures

Some examples of apparatuses and/or methods will be described in the following by way of example only, and with reference to the accompanying figures, in which
- Figs. 1a and 1b: show schematic diagrams of examples of a system for an optical imaging system and of a corresponding optical imaging system;
- Fig. 2: shows an example of a flow chart of a method;
- Figs. 3a and 3b: show examples of senor data and adjusted sensor data;
- Fig. 4: shows a flow chart of an example of a method for an optical imaging system; and
- Fig. 5: shows a schematic diagram of a system comprising a microscope and a computer system.

### Detailed Description

Various examples will now be described more fully with reference to the accompanying drawings in which some examples are illustrated. In the figures, the thicknesses of lines, layers and/or regions may be exaggerated for clarity.

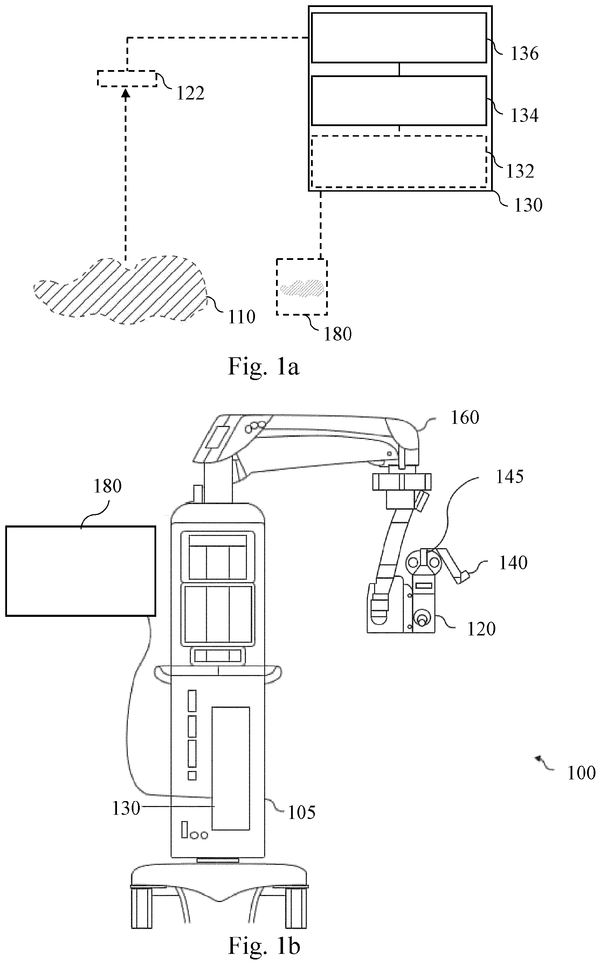

Figs. 1a and 1b show schematic diagrams of an example of an apparatus 130 for an optical imaging system 100 and of a corresponding optical imaging system 100 comprising the apparatus 130. The apparatus 130 is tasked with controlling various aspects of a microscope 120 of the optical imaging system 100, which may be a surgical optical imaging system, and of the entire optical imaging system 100 and/or with processing various types of sensor data of the optical imaging system 100. Consequently, the apparatus 130 may be implemented as a computer system, which interfaces with the various components of the optical imaging system 100, e.g., the sensor 122. The apparatus 130 may be part of the optical imaging system 100. Alternatively, the apparatus 130 may be communicatively coupled to the optical imaging system 100. For example, the apparatus 130 may be a ready-to-use-module, which could be connected to the optical imaging system 100.

The apparatus 130 comprises, as shown in Fig. 1a, one or more processors 134 and one or more storage devices 136. Optionally, the apparatus 130 further comprises one or more interfaces 132. The one or more processors 134 are coupled to the one or more storage devices 136 and to the optional one or more interfaces 132. In general, the functionality of the apparatus 130 may be provided by the one or more processors 134 (e.g., for determining the single image), in conjunction with the one or more interfaces 132 (for exchanging information, e.g., with the optical imaging sensor 122 for receiving the sensor data) and/or with the one or more storage devices 136 (for storing and/or retrieving information).

The apparatus 130 is configured to obtain sensor data of an optical imaging sensor 122 of the optical imaging system 100. The sensor data can be obtained by receiving from the optical imaging sensor 122. Optionally or alternatively, the sensor data can be retrieved from a storage device, e.g., the storage device 136 or a frame buffer.

The sensor data is indicative of an image acquired using the optical imaging system. For example, the sensor data may comprise information about an image of a sample 110. That is, the sensor data may comprise information about an image of the sample 110 acquired using the optical imaging system 100. For example, the sensor data may comprise a life view of the sample 110. Live view refers to a real-time display of the sample 110. For example, a live view may allow the user to see a continuous and up-to-date display of the sample 110 being acquired by the microscope 120. A live view can be particularly useful in process control microscopy applications and/or a surgery, as it allows the user to see an image of the sample 110 in real-time. For example, a live view may be used to inspect and monitor the quality of a work piece during a manufacturing process, to adjust the focus and positioning of the microscope to ensure that the live view is properly acquired or to perform a surgery.

Optionally the sensor data may comprise information about an intervening object. The intervening object may be not part of the sample 110. That is, the user may be not interested in features of the intervening object. The intervening object can be any structure which is not to be intended to be under test of the optical imaging system 100. An intervening object may refer to any component or element placed between the sample 110 being observed and the microscope 120, e.g., an objective lens of the microscope 120. For example, in microsurgery, a user such like a surgeon may often use specialized tools such as microscissors, microforceps, or microsurgical needles. These specialized tools may be placed between the microscope 120 and the surgical cavity to aid in precise manipulation and delicate procedures under high magnification. That is, an intervening object may be such a specialized tool. Thus, the intervening object may enable the user to perform intricate maneuvers with precision, e.g., to manipulate the sample 110. The intervening object can also be referred to as an object not part of the surgical cavity.

In principle, the intervening object may be manipulated within the field of view of the microscope 120 but is not intended to be captured or visible (e.g., a glove or a patient cover) or is intended to be less visible (e.g., a tip of a surgical tool) in the image of the sample 110 (to be displayed), i.e., in the adjusted sensor data. The intervening object may inadvertently appear in the sensor data, e.g., may overlay the image of the sample 110, due to its position or movement. In such cases, the user experience can be decreased due to the intervening object. Thus, there may be a need to improve the image processing pipeline to reduce interference caused by the intervening object. In this way, an improved view of the surgical cavity can be ensured. Thus, the adjusted sensor data may provide an improved image of the sample 110.

Therefore, the apparatus 130 is configured to determine a single of the sample 110 based on the sensor data. Determining the single image may allow to control the generation of adjusted sensor data based on only one frame. For example, the single image may be a static, two-dimensional representation acquired through the microscope 120. The single image may be an image acquired using the optical imaging system 100 at a specific moment in time. Using the single image may allow to control the generation of the adjusted sensor with less computational effort and/or less components of the optical imaging system 100. For example, a need to capture specular reflectance to identify the intervening object based on multiple images can be avoided. Thus, the usage of the single image may facilitate the adjustment of the sensor data.

The single image can be determined based on the image of the sample 100, i.e., based on features of the image of the sample 110. For example, when the size of the image of the sample 110 is smaller than a threshold (which may indicate that the image of the sample is overlaid by an intervening object), the image of the sample may be used as single image. Optionally or alternatively, the single image may be determined based on the intervening object, e.g., an appearance of the region corresponding to the intervening object part of the sensor data, as described below. For example, aa parameter such like a size or a brightness of the region corresponding to the intervening object may be used to determine the single image.

Further, the apparatus 130 is configured to control a generation of adjusted sensor data for suppressing a region corresponding to the intervening object to the user. The control of the generation of the adjusted sensor data is based on the single image. Suppressing the region corresponding to the intervening object may increase the prominence of the image of the sample 110. Thus, a user experience can be improved.

Suppressing the region corresponding to the intervening object may allow to reduce the influence of the intervening object on the image of the sample 110. For example, the intervening object may be an area surrounding the surgical cavity (e.g., white bandages), hands of the user moving through the field of view, or a surgical tool in the field of view causing specular reflections. The intervening object may appear different from the image of the sample 110.

For example, the intervening object may appear brighter in the sensor data and can even saturate the image of the sample 110 to be displayed on the display device 180. Further, not only information may be lost when saturating, the bright areas of region corresponding to the intervening object can also be irritating to the user and/or may overlay a region that is of interest to the user (i.e., a part of the image of the sample 110). Additionally, image post processing might adjust the brightness of the overall image as reaction to the region corresponding to the intervening object, e.g., making the surgical cavity darker and thus decreasing a usability of the image of the sample 110. Thus, the intervening object may negatively affect the usage of the optical imaging system 100. It is a finding of the inventors that the region corresponding to the intervening object can be suppressed based on the single image. For example, the image processing pipeline may be extended by determining the single image and optionally detecting an area that does not fit to the image of the sample 110. The area that does not fit may be the region corresponding to the intervening object. That is, the intervening object may appear different from the sample 110 in the sensor data. For example, the region corresponding to the intervening object may appear brighter than the sample 110. Thus, for example, the apparatus 110 may reduce the brightness of the region corresponding to the intervening object while maintaining the brightness of the image in other areas (e.g., in a region of interest such as an area showing the sample 110). In this way, the apparatus 130 can be used to avoid that the surgical cavity appears too dark when other areas of the image (i.e., the region corresponding to the intervening object) are very bright. Thus, an irritation to the user caused by bright areas in the image that carry no information and can distract from the real information can be reduced or even avoided. In addition, information loss in saturated areas and/or dark areas can be avoided during image post-processing.

The proposed concept may be built around two main components - the microscope 120, which comprises the optical components, and the apparatus 130, which may be used to control the optical imaging system 100, process sensor data of the microscope 120, e.g., the optical imaging sensor 122, and/or to generate to control the generation of the adjusted sensor data.

In general, a microscope, such as the microscope 120, is an optical instrument that is suitable for examining objects that are too small to be examined by the human eye (alone). For example, a microscope 120 may provide an optical magnification of a sample, such as a sample 110 shown in Fig. 1a. In modern microscopes, the optical magnification is often provided for a camera or an imaging sensor, such as the optical imaging sensor 122 of the microscope 120.

The microscope 120 may further comprise one or more optical magnification components that are used to magnify a view of the sample 110, such as an objective.

There are a variety of different types of optical imaging systems. If the optical imaging system 100 is used in the medical or biological fields, the sample 110 may be a sample of organic tissue, e.g., arranged within a petri dish or present in a part of a body of a patient. In some examples of the present disclosure, e.g., as shown in Fig. 1b, the optical imaging system 100 may be a surgical optical imaging system, e.g., an optical imaging system that is to be used during a surgical procedure, such as an oncological surgical procedure or during tumor surgery. However, the proposed concept may also be applied to other types of microscopy, e.g., microscopy in a laboratory or microscopy for the purpose of material inspection.

Fig. 1b shows a schematic diagram of an example of a surgical optical imaging system 100 comprising the microscope 120 and the apparatus 130. In general, a (surgical) optical imaging system is a system that comprises a microscope 120 and additional components, which are operated together with the microscope 120. In other words, a (surgical) optical imaging system is a system that comprises the microscope 120 and one or more additional components, such as the apparatus 130 (which may be a computer system being adapted to control the microscope 120 and, for example, control the generation of the adjusted sensor data), an illumination system (which is used to illuminate a sample being imaged by the microscope 120 and can be controlled by the apparatus 130), additional sensors, displays etc.

The optical imaging system 100 shown in Fig. 1b comprises a number of optional components, such as a base unit 105 (which may comprise the apparatus 130) with a stand, ocular displays 140; 145 that are arranged at the microscope 120, a display device 180, and a (robotic or manual) arm 160 which holds the microscope 120 in place, and which is coupled to the base unit 105 and to the microscope 120. In general, these optional and non-optional components may be coupled to the apparatus 130, which may be configured to control and/or interact with the respective components.

In an example, the apparatus 130 may be configured to determine the single image by determining the region corresponding to the intervening object based on a size of the region corresponding to the intervening object, a brightness of the region corresponding to the intervening object, a position of the region corresponding to the intervening object, a color of the region corresponding to the intervening object and/or a sharpness of the region corresponding to the intervening object. That is, the region of the intervening object can be used to determine the single image. In this way, a determination of the single image can be improved. Optionally or alternatively, as described above, the image of the sample may be used to determine the single image. When, for example, the image of the sample only occupies a part of the image smaller than a threshold value, then the image can be used as the single image. Thus, the single image can be determined based on the region of the intervening object and/or the image of the sample 110.

In an example, the apparatus 130 may be configured to suppress the region corresponding to the intervening object to the user by performing image manipulation for decreasing a prominence of the region corresponding to the intervening object to the user. The image manipulation may be a post processing step of the sensor data. That is, the sensor data may be acquired by the optical imaging sensor 122 of the optical imaging sensor system 100 and adjusted after image acquisition. That is, the apparatus 130 may perform image manipulation to generate the adjusted sensor data.

In an example, the image manipulation may comprise reducing a brightness of the region corresponding to the intervening object to the user. That is, a prominence of the region corresponding to the intervening object can be reduced. For example, the region corresponding to the intervening object may be identified using image processing. The brightness of the pixels (higher brightness means the pixels are closer to white, while lower brightness means they are closer to black) in the region corresponding to the intervening object can be adjusted by scaling of pixel values and/or histogram adjustment, for example. In this way, an irritation of the user due to a bright region corresponding to the intervening object can be reduced or even avoided.

In an example, the image manipulation may comprise applying a mask to the region corresponding to the intervening object to the user. For example, another layer may be added to overlay the region of the intervening object. That is, the appearance of the region of the intervening object can be altered by adding a (new) graphical element on top. The mask can be used to isolate the region corresponding to the intervening object so that any subsequent changes, e.g., the added other layer, will only affect these parts or areas of the image.

In an example, the apparatus 130 may be configured to suppress the region corresponding to the intervening object to the user by generating setting data indicative of a setting of the optical imaging system for decreasing a prominence of the region corresponding to the intervening object to the user. Further, the apparatus 130 may be configured to transmit the setting data for adjusting a setting of the optical imaging system 100. That is, the apparatus 130 may control the generation of the adjusted sensor data by controlling a setting of the optical imaging system 100. Thus, apparatus can control the generation of the adjusted sensor data by post processing of the sensor data, i.e., after image acquisition, e.g., by image manipulation, and/or by adjusting the setting of the optical imaging system 100, i.e., prior to image acquisition, e.g., by adjusting a setting of a light source such like a condenser setting, a light source type, an intensity of the light source.

In an example, the setting data may be for adjusting an exposure algorithm of the optical imaging system. An exposure algorithm may refer to the method used to optimize the exposure settings (like shutter speed, aperture, and gain) to achieve an improved image quality. This may involve balancing light intensity, contrast, and resolution while avoiding issues such as overexposure or underexposure. Thus, the exposure algorithm can also be used to suppress the region of the intervening object. In this way, the prominence of the region of the intervening object can be decreased in a facilitated way.

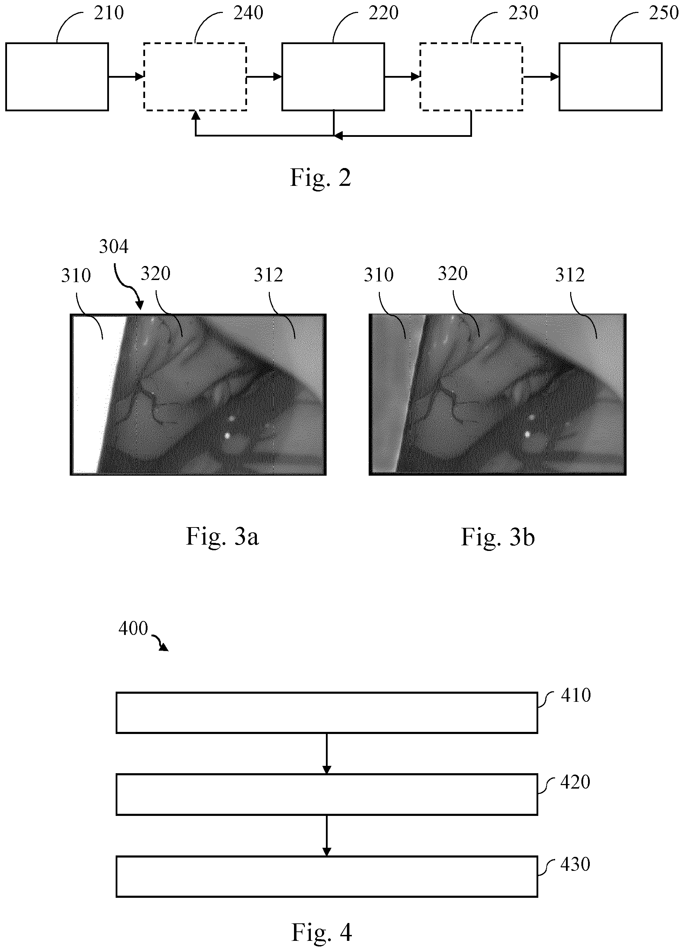

In an example, the apparatus 130 may be configured to determine the single image by determining the region corresponding to the intervening object based on the brightness of the region corresponding to the intervening object and the size of the region corresponding to the intervening object, a position of the region corresponding to the intervening object, a color of the region corresponding to the intervening object and/or a sharpness of the region corresponding to the intervening object. Using the brightness and an additional parameter may improve the determination of the region corresponding to the intervening object. This is described in more detail with reference to Fig. 2.

As shown in Fig. 1a the optional one or more interfaces 132 is coupled to the respective one or more processors 134 at the apparatus 130. In examples the one or more processors 134 may be implemented using one or more processing units, one or more processing devices, any means for processing, such as a processor, a computer or a programmable hardware component being operable with accordingly adapted software. Similar, the described functions of the one or more processors 134 may as well be implemented in software, which is then executed on one or more programmable hardware components. Such hardware components may comprise a general-purpose processor, a Digital Signal Processor (DSP), a micro-controller, etc. The one or more processors 134 is capable of controlling the one or more interfaces 132, so that any data transfer that occurs over the one or more interfaces 132 and/or any interaction in which the one or more interfaces 132 may be involved may be controlled by the one or more processors 134.

In an embodiment the apparatus 130 may comprise a memory, e.g., the one or more storage devices 136 and at least one or more processors 134 operably coupled to the memory and configured to perform the method described below.

In examples the one or more interfaces 132 may correspond to any means for obtaining, receiving, transmitting or providing analog or digital signals or information, e.g., any connector, contact, pin, register, input port, output port, conductor, lane, etc. which allows providing or obtaining a signal or information. The one or more interfaces 132 may be wireless or wireline and it may be configured to communicate, e.g., transmit or receive signals, information with further internal or external components.

The apparatus 130 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the examples described below. The example shown in Fig. 1 may comprise one or more optional or additional features corresponding to one or more aspects mentioned in connection with the proposed concept or one or more examples described below (e.g., Fig. 2 - 5).

Fig. 2 shows an example of a flow chart of a method 200. The method 200 can be performed by an apparatus as described with reference to Fig. 1. The method 200 can be used to detect an area in an acquired image that is bright, irritating, and/or not of interest to a user, e.g., to a surgical procedure to be performed by the user, and to make this area less irritating, especially without decreasing a brightness of the surgical cavity, e.g., a brightness of an image of a sample. This may help to keep the user focus on the surgical cavity and to improve the perception of the information provided to the user. In principle, the method 200 may comprise two steps, first identification of the area (i.e., the region corresponding to the intervening object), and second adjustment of the image by adjusting the sensor data. Note, the adjustment of the sensor data can be performed after image acquisition and/or before (see also Fig. 1). For example, the second step may comprise two separate adjustments of the sensor data, e.g., post processing of the sensor data and adjustment of the setting of the optical imaging system. That is, the adjustment after image acquisition and the adjustment before image acquisition can be combined.

In 210 an image may be acquired. For example, an optical imaging sensor of the optical imaging system is used to acquire an image, e.g., the apparatus as described with reference to Fig. 1 may receive sensor data from the optical imaging sensor. As described above, the image may comprise information about an image of a sample and a region corresponding to an intervening object.

In 220 a detection of an area that is bright, irritating, and/or not of interest to a user can be performed. For example, the brightness of the area may be the most important parameter for detection. However, some areas of the image which actually corresponds to the sample, i.e., which are part of the image of the sample, can appear bright as well, such as specular reflections in the surgical cavity. The area corresponding to the image of the sample should not be affected in the same way by the adjustment of the sensor data as these can carry information that is of interest to the user. That is, the area corresponding to the image of the sample should not be suppressed independently of a brightness.

Therefore, other factors or parameters can be considered to improve detection of the area (which relates to the region corresponding to an intervening object). For example, a size of the area may be used. For example, the area to be suppressed may be large (e.g., a hand of a user, a tool close to the microscope) while for examples specular reflections of the sample are small. In this way, a specular reflection of the sample, which could be of interest to the user can be separated from the area.

A further factor or parameter may be the position of the area. For example, the area may likely be in the periphery of the image (e.g., patient cover) or connected to it (tool reaching into the field of view). Thus, when the area is at the periphery of the image, the likelihood that the area is a region corresponding to an intervening object may be increased.

A further factor or parameter may be a sharpness of the area. Since the microscope of the optical imaging system is typically focused on the sample, an intervening object arranged between the microscope and the sample may likely be out of focus, as the intervening object may be not inside the surgical cavity. This may result in less features (e.g., lower spatial frequencies), which can also be used as indicator.

A further factor or parameter may be a color of the area. The color of an intervening object may likely be different from the color of the sample, as the intervening object is not part of the sample. For example, the area may likely have fewer red tones and, for example, be grey in case of a surgical tool or blue in case of surgical gloves or a patient cover.

In 230 and/or in 240 an adjustment of the sensor data can be performed. Both 230 and 240 are indicated as optional in Fig. 2. However, one of the two must be carried out. These are only shown as optional, as only one can be carried out. In 230 an adjustment of the sensor data by post processing may be performed. That is, the image acquired can be post process by image manipulation. For example, a brightness of the pixels in the determined area can be reduced using image processing (such as scaling of pixel values or histogram adjustment) and/or a mask can be applied to the determined area which changes the appearance, e.g., an overlay of another layer.

The adjusted sensor data (when image manipulation was performed) and/or the determined area can be fed back to an exposure/illumination control. Thus, in 240 an adjustment of the sensor data may be performed based on a change of the setting of the optical imaging system. For example, by excluding the determined area from or reducing in the influence of the determined area on the exposure algorithm an area of interest (i.e., the image of the sample) may be kept at an improved brightness level. In this way, an influence of the determined area (i.e., the region corresponding to the intervening object) on the image of the sample can be reduced or even avoided.

For example, a suppression of the region of interest can also be achieved by adjusting a focus setting of the optical imaging system. The auto-focus could be adjusted to only focus on the surgical cavity and not tools reaching into the field of view. That is, when an area is determined, the focus of the optical imaging can be adjusted such that the area is no longer part of the field of view. In this way, an effect of the region corresponding to the intervening object can be avoided.

The method 200 may result in an image with improved brightness in the area of interest (i.e., the image of the sample) with suppressed area not of interest (i.e., the region corresponding to the intervening object) distracting from the important information. In 250 the adjusted sensor data may be displayed. The apparatus may control a display device for displaying the adjusted sensor data. For example, the apparatus may transmit the adjusted sensor data to the display device (when the apparatus has generated the adjusted sensor data). Optionally or alternatively, the optical imaging sensor may transmit the adjusted sensor data to a frame buffer which may transfer the adjusted sensor data to the display device for displaying.

More details and aspects are mentioned in connection with the examples described above and/or below. The example shown in Fig. 2 may comprise one or more optional or additional features corresponding to one or more aspects mentioned in connection with the proposed concept or one or more examples described above (e.g., Fig. 1) and/or below (e.g., Fig. 3 - 5).

Figs. 3a and 3b show examples of senor data and adjusted sensor data. Fig. 3a shows an image without suppressing of a region 310 corresponding to an intervening object. The region 310 shows a bright saturating area which may distract from the surgical cavity 304. In comparison, in Fig. 3b the region 310 is suppressed resulting in an improved prominence of the image of the sample 320. As can be seen the region 312 may be not adjusted in the adjusted sensor data, since a brightness of the region 312 may below a threshold.

More details and aspects are mentioned in connection with the examples described above and/or below. The example shown in Fig. 3 may comprise one or more optional or additional features corresponding to one or more aspects mentioned in connection with the proposed concept or one or more examples described above (e.g., Fig. 1-2) and/or below (e.g., Fig. 4 - 5).

Fig. 4 shows a flow chart of an example of a method 400 for an optical imaging system. The method 400 may be performed by an apparatus as described with reference to Fig. 1. The method 400 comprises obtaining 410 sensor data of an optical imaging sensor of the optical imaging system. The sensor data is indicative of an image acquired using the optical imaging system. The method 400 further comprises determining 420 a single image based on the sensor data. The method 400 further comprises controlling 430 a generation of adjusted sensor data for suppressing a region corresponding to an intervening object to the user based on the single image.

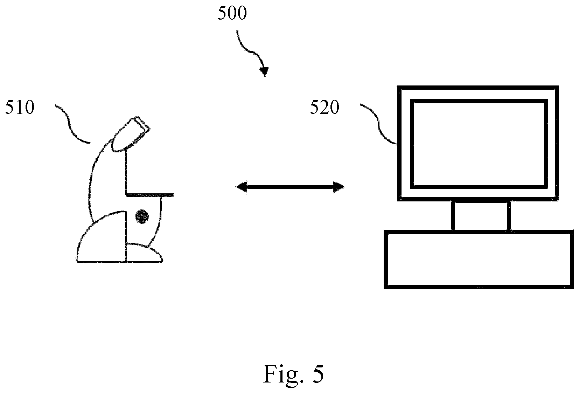

More details and aspects are mentioned in connection with the examples described above and/or below. The example shown in Fig. 4 may comprise one or more optional or additional features corresponding to one or more aspects mentioned in connection with the proposed concept or one or more examples described above (e.g., Fig. 1 - 3) and/or below (e.g., Fig. 5).

Some embodiments relate to a microscope comprising an apparatus as described in connection with Fig. 1. Alternatively, a microscope or an optical imaging system can be communicatively connected to an apparatus as described in connection Figs. 1. Fig. 5 shows a schematic illustration of a system 500, e.g., an optical imaging system, configured to perform a method described herein, e.g., with reference to Figs. 2 or 4. The system 500 comprises a microscope 510 and a computer system 520. The microscope may comprise the apparatus as described above, e.g., with reference to Fig. 1. The microscope 510 is configured to take images and is connected to the computer system 520. The computer system 520 is configured to execute at least a part of a method described herein. The computer system 520 may be configured to execute a machine learning algorithm. The computer system 520 and microscope 510 may be separate entities but can also be integrated together in one common housing. The computer system 520 may be part of a central processing system of the microscope 510 and/or the computer system 520 may be part of a subcomponent of the microscope 510, such as a sensor, an actor, a camera or an illumination unit, etc. of the microscope 510.

The computer system 520 may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system 520 may comprise any circuit or combination of circuits. In one embodiment, the computer system 520 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g., camera) or any other type of processor or processing circuit. Other types of circuits that may be included in the computer system 520 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 520 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 520 may also include a display device, one or more speakers, and a keyboard and/or controller, which can include a mouse, trackball, touch screen, voice-recognition device, or any other device that permits a system user to input information into and receive information from the computer system 520.

More details and aspects are mentioned in connection with the examples described above. The example shown in Fig. 5 may comprise one or more optional or additional features corresponding to one or more aspects mentioned in connection with the proposed concept or one or more examples described above (e.g., Fig. 1 - 4).

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### List of reference Signs

100 optical imaging system
105 base
110 sample
120 microscope
122 sensor
130 apparatus
132 interface
134 processor
136 storage device
140, 145 ocular display
160 arm
180 display device
200 method for an optical imaging system
210 image acquisition
220 determining a region corresponding to an intervening object
230 generating adjusted sensor data
240 generating of adjusted sensor data
250 displaying the adjusted sensor data
304 surgical cavity
310 intervening object
320 image of the sample
400 method for an optical imaging system
410 obtaining sensor data
420 determining a single image
430 controlling a generation of adjusted sensor data
500 system
510 microscope
520 computer system

## Claims

1. An apparatus (130) for an optical imaging system, comprising one or more processors (134) and one or more storage devices (136), wherein the apparatus (130) is configured to:
obtain sensor data of an optical imaging sensor (122) of the optical imaging system (100), the sensor data indicative of an image acquired using the optical imaging system (100);
determine, based on the sensor data, a single image; and
control, based on the single image, the generation of adjusted sensor data for suppressing a region corresponding to an intervening object to the user.

2. The apparatus (130) according to claim 1, wherein the apparatus (130) is configured to
determine the single image by determining the region corresponding to the intervening object based on at least one of a size of the region corresponding to the intervening object, a brightness of the region corresponding to the intervening object, a position of the region corresponding to the intervening object, a color of the region corresponding to the intervening object and a sharpness of the region corresponding to the intervening object.

3. The apparatus (130) according to any one of the preceding claims, wherein the apparatus (130) is configured to
suppress the region corresponding to the intervening object to the user by performing image manipulation for decreasing a prominence of the region corresponding to the intervening object to the user.

4. The apparatus (130) according claim 3, wherein
the image manipulation comprises reducing a brightness of the region corresponding to the intervening object to the user.

5. The apparatus (130) according claim 3 or 4, wherein
the image manipulation comprises applying a mask to the region corresponding to the intervening object to the user.

6. The apparatus (130) according to any one of the preceding claims, wherein the apparatus (130) is configured to
suppress the region corresponding to the intervening object to the user by generating setting data indicative of a setting of the optical imaging system for decreasing a prominence of the region corresponding to the intervening object to the user; and transmit the setting data for adjusting a setting of the optical imaging system.

7. The apparatus (130) according to claim 6, wherein
the setting data is for adjusting an exposure algorithm of the optical imaging system.

8. The apparatus (130) according to any one of claims 2-7, wherein the apparatus (130) is configured to
determine the single image by determining the region corresponding to the intervening object based on the brightness of the region corresponding to the intervening object and at least one of a size of the region corresponding to the intervening object, a position of the region corresponding to the intervening object, a color of the region corresponding to the intervening object and a sharpness of the region corresponding to the intervening object.

9. An optical imaging system (100), comprising
an apparatus (130) according to any one of the preceding claims.

10. A method (200) for an optical imaging system, comprising:
obtaining (210) sensor data of an optical imaging sensor of the optical imaging system, the sensor data indicative of an image acquired using the optical imaging system;
determining (220), based on the sensor data, a single image; and
controlling (230), based on the single, the generation of adjusted sensor data for suppressing a region corresponding to an intervening object to the user.

11. A computer program with a program code for performing the method (200) according to claim 10 when the computer program is executed on a processor.
